# FASCICULE DE BREVET EUROPEEN

(11) **EP 0 866 545 B1**
(45) Date de publication et mention de la délivrance du brevet: **21.02.2001**
(21) Numéro de dépôt: 98470007.0
(22) Date de dépôt: 10.03.1998
(51) Int. Cl.: H02M 3/07

(54) **Circuit élévateur de tension du type pompe de charge à nombre d'étages contrôlé**
Spannungserhöhungsschaltung des Ladungspumpe-Typs mit variabler Anzahl von Stufen
Voltage boosting circuit of the charge pump type with a variable number of stages

(30) Priorité: 19.03.1997 FR 9703510
(43) Date de publication de la demande: 23.09.1998
(73) Titulaire: STMicroelectronics S.A., 94250 Gentilly (FR)
(72) Inventeur: Do, Tien-Dung, 57000 Metz (FR); Lisart, Mathieu Pierre Gabriel, 57000 Metz (FR); Guette, François, 57000 Metz (FR)
(74) Mandataire: Ballot, Paul Denis Jacques

(56) Documents cités:
- EP-A- 0 350 462
- FR-A- 2 724 468
- GB-A- 2 296 605
- US-A- 4 583 157
- US-A- 5 276 646
- US-A- 5 574 634
- PATENT ABSTRACTS OF JAPAN vol. 14, no. 451 (E-0984), 27 septembre 1990 & JP 02 179264 A (NEC CORP.), 12 juillet 1990,

## Description

L'invention concerne un circuit élévateur de tension, du type pompe de charge, à nombre d'étages contrôlé. Elle trouve un intérêt dans tout circuit intégré dans lequel on souhaite produire une tension continue de valeur élevée à partir d'une tension d'alimentation. L'invention trouve un intérêt, par exemple, dans le domaine des circuits comprenant une mémoire électriquement programmable.

Un circuit élévateur de tension du type pompe de charge permet de produire une tension à l'intérieur d'un circuit, à partir d'une tension d'alimentation reçue de l'extérieur, en transférant des charges entre des condensateurs consécutifs, de sorte que la tension produite (positive ou négative) soit supérieure en valeur absolue à la tension d'alimentation.

On utilise principalement ce type de circuit pour alimenter des circuits capacitifs. Par exemple, de tels circuits sont utilisés dans le domaine des mémoires non volatiles électriquement programmables utilisant des transistors de type MOS à grille flottante en tant que cellules de mémorisation, pour produire des tensions de programmation et/ou d'effacement. La programmation et l'effacement de ces mémoires exige, en effet, des niveaux de tension (de l'ordre par exemple de 10 à 20 volts) bien supérieures à celui de la tension d'alimentation généralement utilisée dans les circuits intégrés (de l'ordre, typiquement, de 3 à 5 volts).

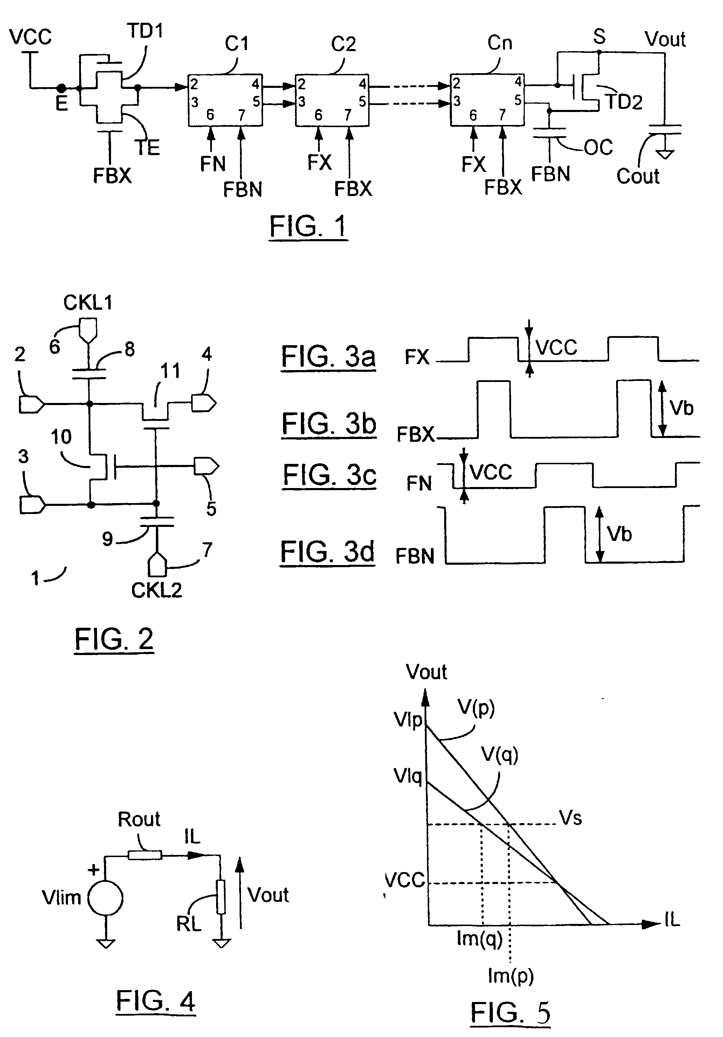

La figure 1 illustre un circuit connu, de type pompe de charge (appelé par la suite pompe de charge), permettant d'alimenter un circuit de type capacitif avec une tension de sortie Vout positive, produite à partir d'une tension d'alimentation VCC. Un tel circuit est décrit par exemple dans le brevet européen 0 591 022 B1 dont le titulaire est SGS-THOMSON Microelectronics S.A. Un autre document montrant l'état de la technique est FR-A-2,724,468.

Le schéma de principe de la pompe est illustré sur la figure 1. Il comprend un ensemble de n (n nombre entier) étages élémentaires C1 à Cn, dont la structure est illustrée sur la figure 2. Les étages sont montés en série, entre une entrée E et une sortie S, et reçoivent des signaux de pilotage FX, FBX, FN, FBN appelés phases (illustrés sur les chronogrammes 3a à 3d). Le circuit capacitif est schématisé, sur la figure 1, par une capacité équivalente Cout reliée à la sortie S de la pompe. On notera que la capacité Cout pourra être la capacité d'un condensateur de sortie physiquement présent et intégré à la pompe de charge. L'entrée E reçoit la tension VCC.

Un étage élémentaire 1, tel qu'illustré sur la figure 2, comprend :
- une première et une deuxième entrées 2 et 3,
- une première et une deuxième sorties 4 et 5,
- deux entrées de synchronisation 6 et 7 pour recevoir deux signaux d'horloge CKL1 et CKL2,
- un premier condensateur 8 relié entre les entrées 2 et 6,
- un deuxième condensateur 9 relié entre les entrées 3 et 7,
- un premier transistor 10 de type MOS à canal N, son drain étant relié à l'entrée 2, sa source étant reliée à l'entrée 3, et sa grille de commande étant reliée à la sortie 5, et
- un deuxième transistor 11 de type MOS à canal N, son drain étant relié à la sortie 4, sa source étant reliée à l'entrée 2, et sa grille de commande étant reliée à l'entrée 3.

Dans la pompe de charge illustrée sur la figure 1, les étages C2 à Cn ont leurs entrées 2 et 3 reliées, respectivement, aux sorties 4 et 5 des étages précédents C1 à Cn-1. L'entrée 2 du premier étage C1 est reliée à l'entrée E par le biais d'un transistor TD1, de type MOS à canal N, monté en diode, et d'un transistor TE, de type MOS à canal N. La grille de commande du transistor TE reçoit une des phases (FX, dans l'exemple illustré) et permet de fournir VCC directement à l'entrée 2 de l'étage C1. L'entrée 3 du premier étage C1 n'est pas reliée. La sortie 4 du dernier étage Cn est reliée à la sortie S. Sa sortie 5 est reliée à sa sortie 4 par le biais d'un transistor TD2, de type MOS à canal N, monté en diode. Cette sortie 5 est reliée, d'autre part, au premier pôle d'une capacité OC dont le deuxième pôle reçoit une des phases (FBN, dans l'exemple illustré).

La pompe de charge illustrée sur la figure 1 est pilotée par deux couples de phases : FN et FX d'une part commutant entre deux niveaux de tension, 0 volts et VCC, ces phases étant complémentaires mais non recouvrantes à l'état haut; FBN et FBX, d'autre part, synchronisées respectivement avec les phases FN et FX, mais commutant entre deux niveaux de tension différents, 0 volts et Vb, où Vb est un niveau de tension supérieur d'au moins Vt (Vt étant la tension de seuil, en tenant compte de l'effet de substrat, des transistors 11 des étages) à la tension que doivent laisser passer les transistors 11 des étages de la pompe de charge.

Les étages reçoivent les phases FN et FBN ou les phases FX et FBX sur leurs entrées 6 et 7, deux étages consécutifs recevant deux couples de phases distinctes. Le transistor TE (respectivement le deuxième pôle de la capacité OC) reçoit la phase FBX ou la phase FBN suivant que le premier étage (respectivement le dernier étage) reçoit la phase FBN ou la phase FBX.

Avec n étages montés en série, on peut produire, en théorie, une tension de sortie Vout = (n + 1) * VCC, disponible sur la sortie 4 du dernier étage Cn, par transferts successifs de charges dans les étages.

En pratique, la valeur de (n + 1) * VCC n'est atteinte que de manière asymptotique en sortie de la pompe de charge, c'est à dire que la tension de sortie Vout augmente de moins en moins vite, au fur et à mesure que l'on transfère des charges d'un étage à l'autre. On est donc souvent amené, pour diminuer le temps de montée de la tension de sortie produite, à utiliser un nombre d'étages supérieur au nombre théoriquement suffisant. Comme on préfère, généralement, produire une tension de sortie dont la valeur est fixée, on est alors amené à limiter à cette valeur la tension produite en sortie de la pompe. Cette limitation peut être réalisée en arrêtant le transfert des charges une fois que la valeur souhaitée est atteinte, par exemple en imposant un potentiel constant au niveau des phases. Elle peut aussi être réalisée en consommant, en sortie de la pompe de charge, le surplus de charges produite. Typiquement, cette consommation est faite par le biais d'une branche fortement résistive dont le seuil de conduction (qui correspond, bien entendu, à la valeur souhaitée) est déterminée par la somme des tensions de seuil de diodes montées en série. Cette dernière solution n'est généralement pas utilisée car elle induit une consommation plus importante. En effet, la pompe de charge fonctionne alors de manière continue.

On a par ailleurs intérêt à utiliser un nombre d'étages important si on considère le courant maximal pouvant être fourni en sortie de la pompe, pour une valeur de tension de sortie donnée.

Considérons, par exemple, le circuit de la figure 4. Il modélise une pompe de charge alimentant une charge résistive RL. La tension aux bornes de la charge RL est Vout et elle est traversée par un courant IL. La pompe de charge est représentée par une source de tension fournissant une tension à vide Vlim et ayant une résistance de sortie Rout. Pour une pompe de charge de n étages, on a Vlim = (n + 1) * VCC. On peut montrer que le courant IL fourni est proportionnel à la fréquence de fonctionnement de la pompe de charge et à la valeur des condensateurs de pompage.

La figure 5 illustre la valeur de la tension de sortie Vout en fonction du courant IL, pour deux pompes à nombre différent d'étages. On note V(p) la tension de sortie d'une pompe de charge de p étages et V(q) la tension de sortie d'une pompe de charge de q étages, en supposant que q < p. Avec q étages on a Vlim = Vlq = (q + 1) * VCC et, avec p étages, on a Vlim = Vlp = (p + 1) * VCC > Vlq.

Si on considère un niveau de tension Vs inférieur à Vlq, on note que le courant Imp que fournit la pompe de charge à p étages est supérieur au courant maximal Imq que fournit la pompe de charge à q étages, et cela pour autant que Vout soit supérieur à VCC. Si on souhaite fournir un courant important. on a donc intérêt à utiliser un nombre d'étages important. Par contre, on note que pour une variation de courant donnée, la chute de tension pour la pompe de charge de q étages est inférieure à la chute de tension pour la pompe de charge de p étages. Autrement dit, en fonctionnement dynamique, on a intérêt à utiliser un nombre d'étages réduit. En effet, on peut montrer que le temps de montée de la tension de sortie est proportionnelle au carré du nombre d'étages de pompage.

Une tendance actuelle est de produire des circuits fonctionnant pour de larges plages de tension d'alimentation (pouvant être alimentés, par exemple, indifféremment en 3 ou 5 volts). Or, si un tel circuit nécessite l'emploi d'une pompe de charge, la valeur de la tension de sortie à produire est généralement imposée par des paramètres physiques du circuit, c'est-à-dire indépendamment de la valeur de la tension d'alimentation. Dans un tel cas, il est nécessaire de prévoir un nombre d'étages correspondant au scénario le plus défavorable, c'est-à-dire en pratique un nombre d'étages suffisants si la valeur de la tension d'alimentation est minimale. En plaçant un circuit de régulation en sortie de la pompe de charge, on limite la valeur de la tension produite, si la tension d'alimentation est supérieure à la valeur minimale. Cette limitation permet de ne pas avoir de variation trop importante de la tension produite, notamment une tension de sortie trop importante quand la tension d'alimentation est élevée, ce qui pourrait occasionner des vieillissements prématurés ou des défaillances des circuits alimentés par la pompe de charge.

La définition d'une pompe de charge apte à fonctionner pour une large plage de tensions d'alimentation présente des inconvénients liés à la nécessité de dimensionner le nombre d'étages en fonction de la tension d'alimentation minimale.

L'impédance de sortie de la pompe est sensiblement constante, quelle que soit la tension d'alimentation. En pratique, cette impédance est inversement proportionnelle à la valeur des capacités des étages et à la fréquence de fonctionnement (c'est-à-dire à la fréquence des phases), et proportionnelle au nombre d'étages. Or, on peut vouloir minimiser cette impédance de sortie. Comme on l'a dit, les pompes de charge sont généralement utilisées pour alimenter en tension des circuits capacitifs. La capacité à atteindre la tension de sortie souhaitée rapidement est donc primordiale. On se pénalise donc dans les cas favorables (tension d'alimentation élevée) pour lesquels un faible nombre d'étages suffirait, puisque la constante de temps en sortie de la pompe de charge augmente avec le nombre d'étages. Une solution est de prévoir une fréquence de fonctionnement faible. Mais, dans ce cas, le courant maximal diminue et le temps de montée de la tension de sortie augmente. On peut également prévoir de diminuer la valeur des condensateurs de pompage. Dans ce cas, on diminue également le courant maximal disponible. En pratique, on est donc amené à opérer des choix par rapport à l'application envisagée, et il est peu aisé de dimensionner une pompe de charge, le nombre de paramètres à prendre en compte étant important et les impacts des modifications d'un paramètre induisant des effets à la fois positifs et négatifs, selon la caractéristique étudiée.

Un but de l'invention est de proposer une pompe de charge optimisée du point de vue de l'impédance de sortie, sans dégradation des autres paramètres de fonctionnement, et qui soit apte à fonctionner sur une large plage de tension d'alimentation. Pour ce faire, l'invention propose une structure de pompe de charge pour lequel le nombre d'étages est variable en fonction de la tension d'alimentation.

Dans l'invention, on utilise tous les étages de la pompe de charge au démarrage . De la sorte, on est certain que la valeur de tension de sortie souhaitée sera atteinte, même si la tension d'alimentation est minimale. Par ailleurs, comme on l'a vu, on a alors un courant maximal plus élevé. Si la tension d'alimentation est assez élevée pour que l'on puisse utiliser un nombre moins important d'étages, on diminue le nombre d'étages de la pompe de charge. Cela permet, d'une part, de diminuer l'impédance de sortie de celle-ci et, d'autre part, de minimiser les variations de la tension de sortie en fonction du courant de sortie. D'autre part, cela permet de minimiser les problèmes d'effet substrat survenant dans les étages de pompage, et qui sont d'autant plus importants que le nombre d'étages est élevé. Ainsi, on obtient globalement de meilleures caractéristiques de fonctionnement pour des tensions d'alimentation élevée, tout en étant apte à fonctionner à faible tension d'alimentation.

Ainsi l'invention propose un circuit élévateur de tension du type pompe de charge comprenant des étages reliés en série pour produire, par transfert de charges entre les étages, une tension de sortie à partir d'une tension d'alimentation. Le circuit comprend des moyens pour diminuer ou augmenter le nombre d'étages reliés, en fonction de la valeur de la tension produite, de sorte que le nombre d'étages reliés est adapté au nombre d'étages nécessaires pour atteindre la valeur de tension de sortie donnée, compte tenu de la valeur de la tension d'alimentation.

Plus particulièrement, il comprend :
- des moyens de commutation pour relier, sélectivement, au moins une sortie d'un étage à une entrée d'un autre étage ou à une sortie du circuit,
- un circuit de régulation comprenant, d'une part, des moyens de comparaison pour comparer la valeur de la tension produite à un seuil d'incrémentation et à un seuil de décrémentation et, d'autre part, des moyens pour comparer la valeur de la tension produite à un seuil de régulation compris entre les seuils d'incrémentation et de décrémentation et pour produire un premier signal de commande représentatif du résultat de cette comparaison, ce premier signal de commande étant fourni à un oscillateur du circuit pour commander ou arrêter le transfert des charges entre les étages, et
- un circuit de commande pour produire, à partir de signaux de commande reçus du circuit de régulation, des signaux de commande de sélection pour commander les moyens de commutation, ledit circuit de commande étant agencé de manière à diminuer le nombre d'étages quand le seuil de décrémentation est atteint, et à augmenter le nombre d'étages quand le seuil d'incrémentation est atteint.

Selon un mode de réalisation, le circuit de régulation comprend un premier comparateur à hystérésis pour produire le premier signal de commande de telle sorte qu'il passe dans un premier état logique quand le seuil de décrémentation est atteint et à ce qu'il passe dans un deuxième état logique quand le seuil de régulation est atteint.

Selon un mode de réalisation, le circuit de régulation comprend un second inverseur à hystérésis pour produire un second signal de commande de telle sorte qu'il passe dans un premier état logique quand le seuil d'incrémentation est atteint et à ce qu'il passe dans un deuxième état logique quand le seuil de régulation est atteint.

Selon un mode de réalisation, le circuit de commande comprend une ou des bascules produisant sur des sorties les signaux de commande de sélection en fonction des signaux de commande produits par le circuit de régulation.

Selon un mode de réalisation, le circuit de commande comprend plusieurs bascules formant un registre à décalage.

Selon un mode de réalisation, le circuit de commande comprend des moyens de commutation pour relier sélectivement des entrées de bascules à des sorties ou des entrées d'autres bascules.

Selon un mode de réalisation, les bascules sont agencées de manière à former un registre à décalage dans lequel on décale dans un sens un premier état logique pour augmenter le nombre d'étages, et dans lequel on décale un deuxième état logique dans le sens inverse pour diminuer le nombre d'étages.

Selon un mode de réalisation, des bascules sont agencées de sorte à modifier simultanément les états de signaux de commande de sélection différents.

Selon un mode de réalisation, les bascules sont agencées de manière à former un registre à décalage dans lequel on décale dans un sens un premier état logique pour augmenter le nombre d'étages et dans lequel les sorties des bascules produisent simultanément des signaux de commande de sélection dans un deuxième état logique pour diminuer le nombre d'étages.

Selon un mode de réalisation, le circuit de commande comprend au moins une bascule produisant un signal de commande de sélection pour commander plusieurs moyens de commutation.

Selon un mode de réalisation, le circuit comprend des moyens de retardement pour retarder les signaux de commande de sélection de manière à augmenter ou diminuer progressivement le nombre d'étages reliés quand on commande plusieurs moyens de commutation avec une seule bascule.

Selon un mode de réalisation, le circuit comprend des circuits translateurs de potentiel, contrôlés par les signaux de commande de sélection, pour commander les moyens de commutation.

Selon un mode de réalisation, le circuit comprend des moyens pour synchroniser les signaux de commande des moyens de commutation avec des signaux de synchronisation reçus par les étages pour piloter le transfert de charges entre les étages.

L'invention propose également un procédé de production d'une tension de sortie, à partir d'une tension d'alimentation, en utilisant un circuit élévateur de tension, du type pompe de charge, ce circuit étant formé d'étages reliés en série et comprenant des moyens de commutation pour isoler sélectivement des autres étages, ou relier sélectivement à des autres étages, certains des étages de ce circuit.

Il comprend les étapes suivantes :
- démarrage du circuit, tous les étages étant reliés en série, de sorte que la valeur maximale de la tension produite pouvant être atteinte soit la plus importante possible, compte tenu du nombre d'étages du circuit et de la tension d'alimentation,
- diminution du nombre d'étages du circuit et/ou arrêt de ce circuit si un seuil de décrémentation est atteint par la tension de sortie,
- redémarrage du circuit si la tension de sortie chute et atteint un seuil de régulation inférieur au seuil de décrémentation, le nombre d'étages étant diminué et/ou le circuit étant arrêté si le seuil de décrémentation est à nouveau atteint,
- augmentation du nombre d'étages si, la tension de sortie ayant chuté et atteint le seuil de régulation, elle atteint ultérieurement un seuil d'incrémentation inférieur au seuil de régulation.

Selon un mode de réalisation, l'augmentation du nombre d'étages est réalisée par groupes d'étages et un retard est introduit entre les étages des groupes de sorte que l'augmentation soit progressive.

Selon un mode de réalisation, le circuit étant agencé de sorte que l'augmentation du nombre d'étages soit telle, quand le seuil d'incrémentation est atteint, que le nombre d'étages soit inférieur au nombre maximal d'étages, on reconnecte tous les étages en série si la tension de sortie atteint un quatrième seuil, inférieur au seuil d'incrémentation.

L'invention sera mieux comprise, et d'autres avantages et particularités apparaîtront à la lecture de la description détaillée ci-après d'un exemple de réalisation de l'invention, illustré par les dessins annexés dans lesquels :
- la figure 1 représente schématiquement un circuit élévateur de tension, du type pompe de charge, selon l'état de la technique,
- la figure 2 illustre la structure d'un étage élémentaire du circuit de la figure 1,
- les figures 3a à 3d représentent des chronogrammes de signaux de pilotage utilisés pour le fonctionnement du circuit élévateur de tension de la figure 1,
- la figure 4 représente un schéma représentatif de l'alimentation d'une charge résistive par une pompe de charge,
- la figure 5 illustre, pour des pompes de charge à nombres d'étages différents, l'évolution de la tension de sortie en fonction d'un courant de charge,
- la figure 6 représente schématiquement un circuit élévateur de tension, du type pompe de charge, réalisé conformément à l'invention,
- la figure 7 représente une partie du circuit de la figure 6,
- la figure 8 représente un circuit translateur de potentiel utilisé pour produire des signaux de commande,
- la figure 9 représente un circuit de synchronisation,
- la figure 10 représente un circuit de régulation,
- les figures 11a à 11c représentent des chronogrammes de signaux,
- la figure 12 représente un premier exemple de circuit de commande,
- la figure 13 représente un circuit de retardement de signaux,
- la figure 14 représente un second exemple de circuit de commande,
- la figure 15 représente un troisième exemple de circuit de commande,
- la figure 16 représente un circuit permettant de produire des signaux utilisés dans le circuit illustré sur la figure 15,
- la figure 17 représente un quatrième exemple de circuit de commande.

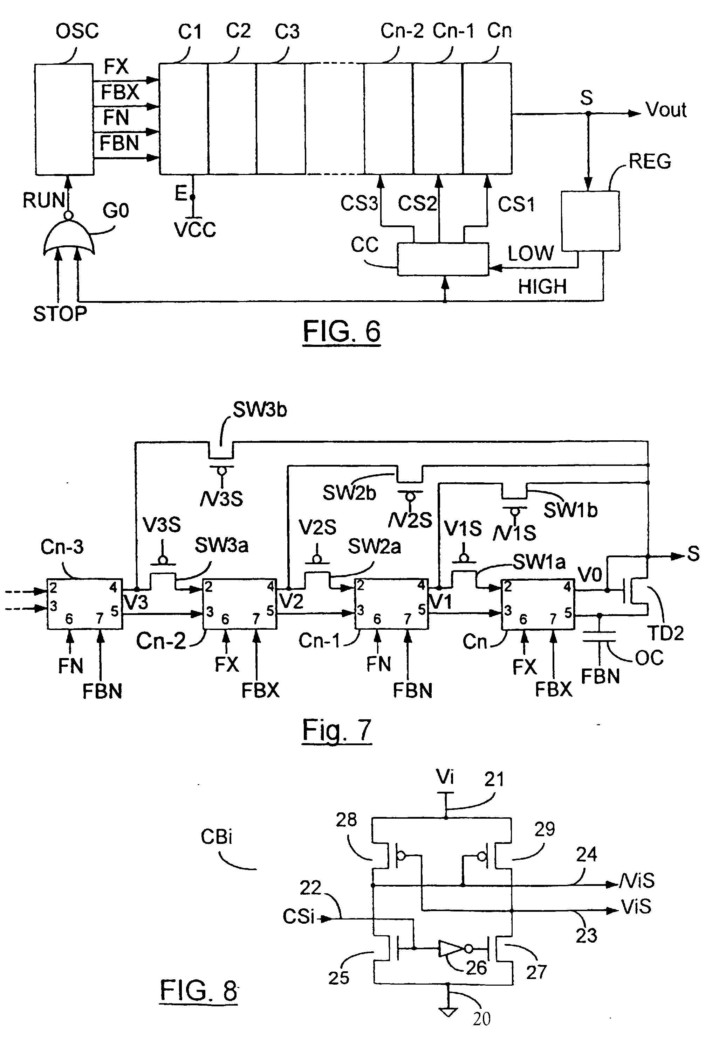

La figure 6 représente schématiquement un circuit élévateur de tension, du type pompe de charge (appelé ci-après pompe de charge), réalisé conformément à l'invention. Il permet de produire une tension de sortie Vout à partir d'une tension d'alimentation VCC, de telle sorte que la tension Vout produite soit supérieure. en valeur absolue, à la valeur de la tension VCC.

Dans la suite de la description, en considérant un signal logique binaire X, la notation /X désignera le signal logique complémentaire du signal X.

La pompe de charge de la figure 6 comprend, de manière analogue à la pompe de charge de l'état de l'art illustrée sur la figure 1, un ensemble de n étages élémentaires C1 à Cn, montés en série. La pompe de charge produit la tension de sortie Vout sur une sortie S.

Le fonctionnement de la pompe de charge est piloté par des signaux de commande tels que les phases illustrées sur les figures 3a à 3d, ces phases étant produites par un oscillateur OSC suivant l'état d'un signal logique de commande RUN qui autorise ou interdit le fonctionnement de l'oscillateur. Par exemple le fonctionnement est autorisé si RUN est à l'état haut et interdit dans le cas contraire. Dans ce dernier cas, typiquement, on maintiendra les phases à un potentiel fixe. Comme on le verra par la suite, la pompe de charge selon l'invention est du type de celles pour lesquelles on peut arrêter le transfert de charges quand un niveau de tension donné est atteint en sortie.

Le signal RUN est, par exemple, produit par une porte logique G0 de type NON_OU, à deux entrées, recevant sur une première entrée un signal logique de commande STOP qui permet de démarrer ou d'arrêter l'oscillateur. On ne décrira pas ici la structure de l'oscillateur OSC, un tel circuit étant bien connu de l'homme de l'art. Le signal STOP sera par exemple fourni par un circuit de commande, non représenté, quand il est nécessaire de produire la tension de sortie. Un tel circuit, si on considère par exemple une mémoire, sera, typiquement, sensible aux signaux de commande de programmation et/ou d'effacement.

La pompe de charge comprend, par ailleurs, un circuit de régulation REG et un circuit de commande CC. Le circuit de régulation REG fournit un premier signal logique de commande HIGH et un second signal de commande LOW.

Le signal de commande HIGH, dit de décrémentation, est fourni à une deuxième entrée de la porte G0 et au circuit de commande CC. Le signal de commande LOW, dit d'incrémentation, est fourni au circuit de commande CC.

Le circuit de commande CC fournit des signaux de commande CS1, CS2 et CS3 aux trois derniers étages Cn, Cn-1 et Cn-2 de la pompe de charge (on suppose ici, bien entendu, que n est supérieur à 3).

Le signal de commande de décrémentation HIGH permet de commander le déclenchement ou l'arrêt du transfert de charges d'un étage au suivant, quand le signal STOP est par ailleurs à l'état bas.

La porte G0 étant une porte de type NON_OU, on suppose ici qu'il y a transfert de charges si le signal HIGH est à l'état bas et que ce transfert est arrêté si il est à l'état haut. En effet, en supposant que le signal STOP est à l'état bas, le signal RUN est dans un état opposé à celui du signal HIGH. On pourra, bien entendu, choisir d'utiliser un autre type de porte et modifier en conséquence les polarités des signaux logiques.

Comme on le verra par la suite, le signal de commande de décrémentation HIGH est également utilisé pour commander une diminution du nombre d'étages de la pompe de charge.

Le signal de commande d'incrémentation LOW est, en ce qui le concerne, utilisé pour commander une augmentation du nombre d'étages de la pompe de charge.

L'invention propose de modifier le nombre total d'étages reliés en série, en fonction des valeurs de la tension d'alimentation VCC et de la tension de sortie Vout, de sorte à optimiser l'impédance de sortie en minimisant le nombre d'étages quant la tension d'alimentation est élevée.

Dans la suite de la description, on suppose que l'on peut isoler ou relier en série, avec les autres étages, les trois derniers étages Cn-2, Cn-1 et Cn de la pompe de charge. Il va de soi que l'on pourra étendre l'invention à un nombre plus important ou moins important d'étages. On supposera, par ailleurs, que la tension de sortie Vout produite par la pompe de charge est positive. L'homme de l'art étendra sans peine l'invention au cas d'une pompe de charge délivrant une tension négative.

### 1 - Structure des derniers étages de la pompe de charge.

La figure 7 illustre en détail les derniers étages de la pompe de charge de la figure 6.

Sur cette figure 7, on a représenté les quatre derniers étages Cn-3 à Cn de la pompe de charge. Ces étages auront, par exemple, une structure similaire à celle de l'étage de l'état de l'art illustré sur la figure 2.

On note respectivement V3, V2, V1 et V0 les tensions présentes sur les sorties 4 des étages Cn-3, Cn-2, Cn-1 et Cn.

Les sorties 4 des étages Cn-3, Cn-2 et Cn-1 sont reliées, respectivement, à l'entrée 2 de l'étage Cn-2, à l'entrée 2 de l'étage Cn-1 et à l'entrée 2 de l'étage Cn par le biais de premiers circuits de commutation.

Dans l'exemple illustré, ces premiers circuits de commutation sont des transistors de type MOS à canal P, portant respectivement les référence SW3a, SW2a et SW1a. Ces transistors permettent de relier ou d'isoler la sortie 4 d'un étage de l'entrée 2 de l'étage suivant, en fonction de signaux de commande de commutation (respectivement référencés V3S, V2S et V1S) reçus sur leur grille de commande. Ainsi, le transistor SW3a permet d'isoler les étages Cn-3 et Cn-2, le transistor SW2a permet d'isoler les étages Cn-2 et Cn-1 et le transistor SW1a permet d'isoler les étages Cn-1 et Cn. C'est donc par le biais de ces transistors que l'on va modifier le nombre d'étages de la pompe de charge. Bien entendu, on pourra choisir d'utiliser d'autres types de transistors pour réaliser les premiers circuits de commutation, l'important étant qu'il soit possible d'isoler les étages entre eux.

Les sorties 4 des étages Cn-3, Cn-2 et Cn-1 sont, par ailleurs, reliées à la sortie S de la pompe de charge, par le biais de seconds circuits de commutation.

Dans l'exemple illustré, ces seconds circuits de commutation sont des transistors de type MOS à canal P, portant respectivement les références SW3b, SW2b et SW1b. Ces transistors permettent de relier ou d'isoler, respectivement, les sorties 4 des étages Cn-3, Cn-2 et Cn-1 de la sortie S, en fonction des signaux de commande de commutation /V3S, /V2S et /V1S reçus sur leur grille de commande. Ainsi, le transistor SW3b permet d'isoler la sortie 4 de l'étage Cn-3 de la sortie S, le transistor SW2b permet d'isoler la sortie 4 de l'étage Cn-2 de la sortie S, et le transistor SW1b permet d'isoler la sortie 4 de l'étage Cn-1 de la sortie S. Ces transistors permettent de relier la sortie de la pompe de charge à la sortie du dernier étage qui est relié en série avec les premiers étages de la pompe (autrement dit, à la sortie du dernier étage qui ne soit pas isolé des autres étages, quand le nombre d'étages utilisés est inférieur au nombre d'étages maximal).

Comme les signaux de commande de commutation des premiers et seconds circuits de commutation placés en sortie des étages Cn-3, Cn-2 et Cn-1 sont complémentaires, la sortie 4 de ces étages Cn-3, Cn-2 et Cn-1 est reliée soit à l'entrée 2 de l'étage qui suivant, soit à la sortie S.

### 2 - Production des signaux de commande de commutation.

Les signaux de commande de commutation complémentaires ViS et /ViS (i entier, ici égal à 1, 2 ou 3) sont produits, par exemple, par des circuits translateurs de potentiel CBi, eux-mêmes pilotés par des signaux de commande de sélection. Ces circuits permettent de produire des signaux logiques de commande de potentiel élevé, à partir de signaux logiques de commande de potentiel moins élevé. L'utilisation de tels circuits se justifie par l'impossibilité de rendre non passants les transistors SW1a, SW1b, SW2a, SW2b, SW3a et SW3b, à canal P, en appliquant le potentiel VCC sur leur grille de commande.

La figure 8 illustre un exemple de circuit translateur de potentiel CBi.

Il comprend une entrée d'alimentation 20 pour recevoir un potentiel de référence (ou masse), un entrée d'alimentation 21 pour recevoir la tension Vi produite par la cellule Cn-i, une entrée de commande 22 pour recevoir un signal logique de commande de sélection CSi, et deux sorties de commande 23 et 24 pour fournir les signaux de commande de commutation ViS et /ViS.

L'entrée 22 est reliée, d'une part, à la grille de commande d'un transistor 25, de type MOS à canal N, et, d'autre part, à l'entrée d'un inverseur 26. La sortie de l'inverseur 26 est reliée à la grille de commande d'un transistor 27 de type MOS à canal N. Les transistors 25 et 27 ont leur source respective reliée à l'entrée 20. Le drain du transistor 25 est relié respectivement au drain d'un transistor 28 de type MOS à canal P, à la sortie 24, et à la grille de commande d'un transistor 29 de type MOS à canal P. Le drain du transistor 27 est relié respectivement au drain du transistor 29, à la sortie 23, et à la grille de commande du transistor 28. Les transistors 28 et 29 ont leur source respective reliée à l'entrée 21.

On suppose que le signal de commande de sélection CSi est à 0 volts ou à VCC et que l'inverseur 26 est alimenté par la masse et VCC.

Quand le signal de commande de sélection CSi est à 0 volts, le transistor 25 est bloqué et le transistor 27 est passant. Le signal de commande de commutation ViS est donc à 0 volts et le transistor 28 est passant. Le signal de commande de commutation /ViS est donc au potentiel Vi et le transistor 29 est bloqué.

Quand le signal de commande de sélection CSi est à VCC, le transistor 27 est bloqué et le transistor 25 est passant. Le signal de commande de commutation /ViS est donc à 0 volts et le transistor 29 est passant. Le signal de commande de commutation ViS est donc au potentiel Vi et le transistor 28 est bloqué.

Le circuit translateur de potentiel CBi permet de transformer un signal logique de sélection de basse tension, à 0 volts ou VCC, en signal logique de haute tension, à 0 volts ou Vi.

Quand le signal de commande de sélection CSi est à l'état bas (c'est-à-dire à 0 volts), la sortie 4 de l'étage Cn-i est reliée à l'entrée 2 de l'étage Cn-i+1 et est isolée de la sortie S.

Inversement, quand le signal de commande de sélection CSi est à l'état haut (c'est-à-dire à VCC), la sortie 4 de l'étage Cn-i est reliée à la sortie S et est isolée de l'entrée 2 de l'étage Cn-i+1.

On utilisera, bien entendu, autant de circuits translateurs de potentiel qu'il y aura d'étages auxquels sont associés des circuits de commutation permettant de les isoler des étages précédents. Ainsi, dans l'exemple illustré, on utilisera des circuits CB1, CB2 et CB3 (non représentés sur la figure 7), réalisés conformément à la description ci-dessus, pour produire les signaux de commande de commutation (V1S, /V1S, V2S, /V2S, V3S, /V3S) utilisés pour isoler ou relier (aux autres étages) les étages Cn, Cn-1 et Cn-2.

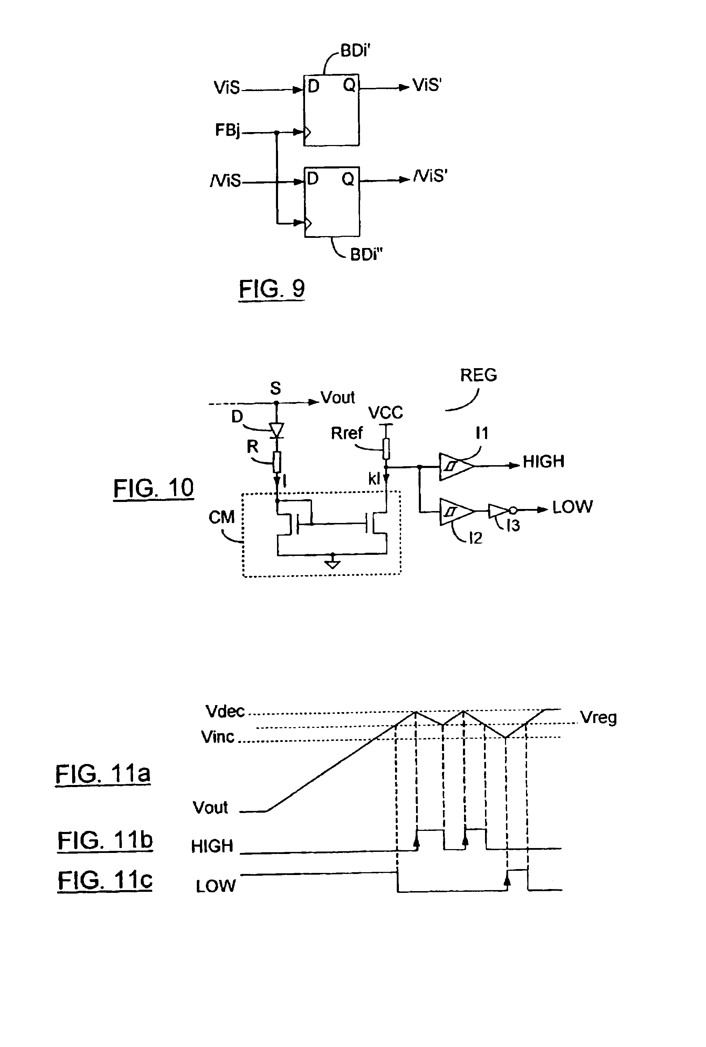

On pourra, par ailleurs, autoriser ou non l'isolement ou l'ajout d'un étage Cn-i+1 en fonction des phases reçues par l'étage Cn-i précédent afin d'éviter d'induire des perturbations dans le transfert de charges (qui s'effectue dans les étages quand les phases sont à l'état haut). Une solution, illustrée sur la figure 9, est de prévoir d'autoriser l'isolement ou l'ajout de l'étage Cn-i+1 si les phases reçues par l'étage précédent Cn-i sont à l'état haut. Autrement dit, on synchronise les signaux de commande de commutation avec les phases.

On produit des signaux de commande de commutation ViS' et /ViS' par le biais de bascules BDi' et BDi" recevant les signaux de commande de commutation ViS et /ViS produits par le circuit translateur de potentiel CBi et la phase FBj sur leurs entrées de commande (FBj étant la phase FBN ou FBX reçue par l'étage Cn-i). Les signaux de commande de commutation ViS' et /ViS' seront utilisés pour piloter les circuits de commutation, en lieu et place des signaux de commande de commutation ViS et /ViS. Ainsi, la modification du nombre d'étage est effectuée sur front montant de la phase FBj.

La solution illustrée sur la figure 9 suppose que l'on dispose de bascules aptes à recevoir et à fournir des potentiels élevés. Bien entendu, on pourra choisir de prendre en compte les phases de commande en aval des circuits translateurs de potentiel. Cela présente également l'avantage de permettre l'utilisation d'une seule bascule pour prendre en compte les phases. En effet, il suffit alors de synchroniser le seul signal de commande de sélection CSi au lieu des deux signaux de commande de commutation ViS et /ViS. On pourra fournir, à cette bascule, soit le signal FBj (si elle est apte à supporter un potentiel élevé sur son entrée de commande), soit une fraction de ce potentiel (par exemple par le biais d'un pont résistif).

### 3 - Circuit de régulation.

La figure 10 illustre un exemple simplifié de réalisation du circuit de régulation REG.

Le circuit de régulation REG permet de produire les signaux logiques de commande d'incrémentation LOW (ce signal commandant l'augmentation du nombre d'étages) et de commande de décrémentation HIGH (ce signal commandant, d'une part, la diminution du nombre d'étages et, d'autre part, l'arrêt ou la mise en marche de l'oscillateur OSC).

Les états logiques de ces signaux logiques de commande de décrémentation et d'incrémentation sont fonction de la valeur de la tension de sortie Vout produite par la pompe de charge. Le changement des états de ces signaux de commande se produit en référence à des valeurs seuils de la tension de sortie Vout.

Un premier seuil Vinc, dit d'incrémentation, est utilisé pour augmenter le nombre d'étages de la pompe de charge.

Un deuxième seuil Vreg, dit de régulation, supérieur au seuil d'incrémentation, est utilisé pour piloter la mise en oeuvre ou l'arrêt de la production des phases utilisées par les étages.

Un troisième seuil Vdec, dit de décrémentation, supérieur au seuil de régulation, est utilisé pour diminuer le nombre d'étages de la pompe de charge.

La pompe de charge décrite produisant une tension de sortie positive, les seuils sont bien évidemment positifs. Pour une pompe de charge produisant une tension négative, ces seuils seront négatifs et les relations de supériorité seront conservées, en valeur absolue.

La comparaison de la valeur de la tension de sortie Vout aux différents seuils est réalisée, dans l'exemple illustré, par le biais de deux inverseurs à hystérésis I1 et I2 recevant une tension d'entrée IN représentative de la valeur de la tension de sortie Vout.

Pour ce faire, on prélève un courant I au niveau de la sortie S. Ce prélèvement se fera, de préférence, dans une branche fortement résistive de manière à minimiser la valeur du courant prélevé. De même, on pourra fixer un seuil de conduction de la branche résistive, par exemple à l'aide d'une ou plusieurs diodes montées en série, de telle sorte que la branche ne conduise pas tant que la tension de sortie Vout n'a pas atteint le seuil de conduction fixé par ces diodes.

Dans l'exemple illustré, la branche résistive comprend une diode D et une résistance R montées en série, l'anode de la diode étant reliée à la sortie S. Le courant I est amplifié dans un miroir de courant CM formé de deux transistors, de type MOS à canal N, et qui fournit un courant k * I. Le facteur k est, de préférence, supérieur à 1, ce qui permet d'obtenir une large plage de variation de la tension IN à partir d'un faible prélèvement de courant sur la sortie S.

Le courant k * I circule dans une résistance de référence Rref qui fait office de source de tension commandée en courant. Cette résistance Rref a un premier pôle qui reçoit VCC et son deuxième pôle est relié à la masse par le biais du transistor de recopie du miroir de courant CM.

Le deuxième pôle de la résistance Rref est relié aux entrées des inverseurs à hystérésis I1 et I2.

Les inverseurs à hystérésis I1 et 12 ont pour objet de produire les signaux de commande HIGH et LOW, les états de ces signaux étant représentatifs de la valeur de la tension de sortie Vout.

L'inverseur I1 délivre le signal de commande de décrémentation HIGH. On supposera qu'il a le seuil de décrémentation Vdec comme seuil de transition positive et le seuil de régulation Vreg comme seuil de transition négative.

On supposera, par ailleurs, que l'inverseur I2 a le seuil de régulation Vreg comme seuil de transition positive et le seuil d'incrémentation Vinc comme seuil de transition négative. La sortie de l'inverseur I2 est reliée à l'entrée d'un inverseur I3 dont la sortie délivre le signal de commande d'incrémentation LOW.

On va maintenant décrire, en référence aux chronogrammes 11a à 11c, le fonctionnement du circuit de régulation REG.

Le procédé mis en oeuvre comprend les étapes suivantes :
- démarrage de la pompe de charge, tous les étages étant reliés en série, de sorte que la valeur maximale de la tension de sortie produite pouvant être atteinte soit la plus importante possible, compte tenu du nombre d'étages du circuit et de la tension d'alimentation,
- diminution du nombre d'étages du circuit et/ou arrêt de ce circuit si le seuil de décrémentation est atteint par la tension de sortie,
- redémarrage du circuit si la tension de sortie chute et atteint le seuil de régulation, le nombre d'étages étant diminué et/ou le circuit étant arrêté si le seuil de décrémentation est à nouveau atteint,
- augmentation du nombre d'étages si, la tension de sortie ayant chuté et atteint le seuil de régulation, elle atteint ultérieurement le seuil d'incrémentation.

Supposons que le nombre d'étages de la pompe de charge soit maximal et que l'on initie le transfert de charges dans ces étages, en mettant le signal STOP à l'état bas. La tension de sortie Vout (illustrée sur la figure 11a) va progressivement monter.

Tant que le seuil de conduction de la branche résistive n'est pas atteint, le courant I est nul. La tension IN est donc égale à VCC. Les signaux de commande HIGH et LOW (illustrés sur les figures 11b et 11c) sont respectivement à l'état bas et à l'état haut.

Puis, la branche résistive devient conductrice. Le courant I augmente au fur et à mesure que la tension de sortie Vout augmente. Le courant k * I augmente également. En conséquence, la tension IN diminue progressivement.

Quand la tension de sortie Vout atteint le seuil d'incrémentation Vinc, la sortie de l'inverseur I2 reste à l'état bas. Quand la tension de sortie Vout atteint le seuil de régulation Vreg, la sortie de l'inverseur I2 passe à l'état haut. En conséquence, le signal de commande LOW passe à l'état bas.

Ultérieurement, quand la tension de sortie Vout atteint le seuil de décrémentation Vdec, le signal de commande HIGH passe à l'état haut. On arrête alors le transfert de charges dans les étages. Simultanément, on diminue, comme on le verra par la suite, le nombre d'étages reliés entre eux.

Si, ultérieurement, la tension de sortie Vout chute et atteint de nouveau le seuil de régulation Vreg, la sortie de l'inverseur I1 passe à l'état bas, ce qui a pour conséquence de redémarrer le transfert de charges entre les étages.

Si, de nouveau, le seuil de décrémentation Vdec est atteint (c'est-à-dire si le nombre d'étages peut encore être diminué pour atteindre la tension de sortie Vout désirée), alors le signal de commande HIGH repasse à l'état haut, ce qui a pour effet d'arrêter à nouveau le transfert de charges et de diminuer le nombre d'étages.

On va ainsi, progressivement adapter le nombre d'étages reliés en série à la valeur de la tension d'alimentation VCC afin de minimiser l'impédance de sortie de la pompe de charge.

Si la tension de sortie Vout chute et atteint le seuil d'incrémentation Vinc, par exemple à la suite d'une consommation importante en sortie de la pompe de charge ou d'une variation de la tension d'alimentation, la sortie de l'inverseur I2 passe à l'état bas.

Le signal de commande d'incrémentation LOW va donc passer à l'état haut, ce qui entraîne comme on le verra par la suite une augmentation du nombre d'étages de la pompe de charge (si les n étages ne sont pas déjà reliés entre eux, bien entendu).

### 4.1 - Circuit de commande : exemple 1.

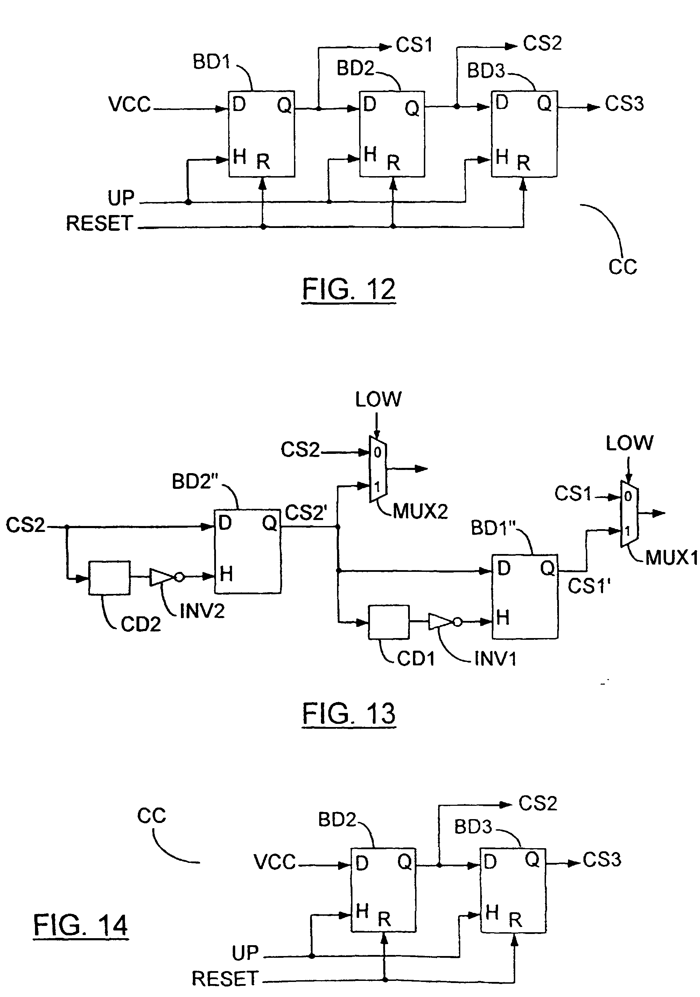

La figure 12 illustre un premier exemple de réalisation du circuit de commande CC.

Il comprend trois bascules D, portant les références BD1, BD2 et BD3, montées en série et formant un registre à décalage. Les bascules comprennent classiquement une entrée D de donnée, une sortie Q de donnée, une entrée de commande H et une entrée de réinitialisation R. Les sorties des bascules fournissent respectivement les signaux de commande de sélection CS1, CS2 et CS3. Bien entendu, on adaptera le nombre de bascules au nombre de signaux de commande de sélection à produire.

L'entrée D de la bascule BD1 reçoit VCC. Les entrées D des bascules BD2 et BD3 sont reliées, respectivement, aux sorties des bascules BD1 et BD2, et reçoivent donc, respectivement, les signaux CS1 et CS2.

Les entrées H des bascules reçoivent un signal de validation UP, et leurs entrées de réinitialisation reçoivent un signal de réinitialisation RESET. On supposera que les signaux de validation et de réinitialisation sont actifs sur front montant. Autrement dit, quand un front montant apparaît sur le signal de validation UP, le signal présent sur l'entrée de donnée d'une bascule est transféré sur sa sortie. De même, quand un front montant apparaît sur le signal de réinitialisation RESET, les signaux présents sur les sorties Q sont mis à l'état bas.

Dans le premier exemple, illustré sur la figure 12, on diminue, le cas échéant, le nombre d'étages en les déconnectant un par un, par décalage dans les bascules d'un état logique haut. On augmente, le cas échéant, le nombre d'étages en reconnectant tous les étages précédemment déconnectés, en imposant des états logiques bas en sortie des bascules. Pour ce faire, on pourra choisir UP = HIGH et RESET = LOW (pour ce dernier signal, comme on le verra ci-dessous, on pourra combiner le signal LOW avec un autre signal pour garantir, au démarrage, que le nombre d'étages est maximal).

Initialement, lorsque l'on met en marche la pompe de charge, les signaux de commande de sélection CS1 à CS3 sont à l'état bas. Pour en être assuré, on pourra produire le signal de réinitialisation RESET à l'aide d'une porte logique de type OU recevant, d'une part, le signal LOW et, d'autre part, un signal produit par un monostable commandé par le signal STOP de telle sorte qu'une impulsion positive soit produite quand on démarre la pompe de charge. Tous les étages C1 à Cn sont alors reliés en série. Le signal de commande de décrémentation HIGH est à l'état bas.

Comme on l'a vu, la valeur de la tension de sortie Vout va progressivement augmenter, au fur et à mesure du pompage dans les étages. Si, compte tenu de la valeur de la tension d'alimentation VCC, les n étages permettent de fournir une tension plus importante que le seuil de décrémentation Vdec, alors la tension de sortie Vout va atteindre ce seuil. Le signal de commande de décrémentation HIGH passe alors à l'état haut. La sortie Q de la première bascule BD1 va alors fournir un signal de commande de sélection CS1 se trouvant à l'état haut. Le dernier étage Cn est, par conséquent, isolé des autres étages et, parallèlement, on arrête le transfert de charges entre les étages.

Si des fuites se produisent en sortie de la pompe de charge, ou si il y a consommation des circuits alimentés par cette pompe, la tension de sortie Vout va diminuer. Quand elle atteint le seuil de régulation Vreg, le transfert de charges va redémarrer et, parallèlement, le signal de commande de décrémentation repasse à l'état bas. Si n * VCC > Vdec, alors le signal de commande de décrémentation HIGH va repasser à l'état haut. En conséquence, le signal CS2 passe à l'état haut. On isole alors l'étage Cn-1 des autres étages. La pompe de charge comprend alors n-2 étages montés en série entre l'entrée E et la sortie S. Parallèlement, on arrête le transfert de charges dans les étages.

Si, ultérieurement, la tension en sortie Vout diminue (par consommation des circuits alimentés par la pompe de charge ou à cause de fuites) alors, de même que précédemment, on redémarre le transfert de charges.

Si la tension de sortie Vout continue à chuter (par exemple si la tension d'alimentation VCC chute), il se peut que le transfert de charges ne permette pas de la faire remonter, compte tenu du nombre d'étages reliés en série. Si tel est le cas, on remet à l'état bas tous les signaux de commande CS1 à CS3 dès que le seuil d'incrémentation Vinc est atteint (ce qui induit un front montant dans le signal de commande d'incrémentation LOW appliqué aux entrées de réinitialisation). On revient alors dans l'état initial dans lequel les n étages sont utilisés, c'est-à-dire dans une configuration telle que la valeur que peut atteindre la tension de sortie Vout est maximale.

### 4.2 - Circuit de commande : exemple 2.

La figure 13 illustre une variante du circuit de la figure 12, qui permet de mettre en oeuvre une augmentation progressive du nombre d'étages, quand l'augmentation est réalisée par groupes d'étages, en retardant les actions des signaux de commande de sélection les uns par rapport aux autres pour les étages des groupes, quand le signal de commande d'incrémentation LOW passe à l'état haut. Cela permet de limiter le risque de dysfonctionnement parasite que peut provoquer une reconnexion simultanée de tous les étages de la pompe de charge qui auraient été précédemment déconnectés.

Sur le schéma de la figure 13, les signaux de commande de sélection CS1 et CS2 sont fournis aux entrées de deux bascules BD1" et BD2".

L'augmentation du nombre d'étages se fait, logiquement, dans l'ordre inverse de la diminution de ce nombre. Ainsi, on va d'abord reconnecter l'étage Cn-2, puis l'étage Cn-1 puis l'étage Cn par le biais des signaux de commande de sélection CS3, CS2 et CS1.

Le signal de commande de sélection CS3 étant le signal utilisé pour reconnecter le premier étage pouvant être reconnecté, il n'est pas nécessaire de modifier son action en le retardant. On va, par contre, retarder le signal CS2 par rapport au signal CS3, et le signal CS1 par rapport au signal CS2.

Ainsi, l'entrée de commande de la bascule BD2" reçoit le signal de commande de sélection CS2 par le biais d'un circuit à retard CD2 et d'un inverseur INV2. Le circuit à retard CD2 est par exemple constitué de deux inverseurs montés en série et d'une capacité reliée entre la masse et la sortie (respectivement l'entrée) du premier (respectivement du deuxième) inverseur. Une transition en sortie du premier inverseur induit la charge ou la décharge de la capacité, ce qui retarde la propagation de la transition vers l'entrée du deuxième inverseur. Le fait de produire un signal de commande retardé permet de s'assurer de la stabilité de l'état sur l'entrée de la bascule avant l'apparition d'un front à l'entrée de commande de cette bascule. L'inverseur permet de transformer un front descendant du signal CS2 (consécutif au front montant du signal de commande LOW) en front montant (on suppose ici que la commande de la bascule est faite sur front montant du signal reçu sur l'entrée de commande).

On note CS2' le signal produit par la bascule BD2". L'état de ce signal est identique à celui du signal de commande de sélection CS2, avec un certain retard.

La bascule BD1" reçoit le signal de commande de sélection CS1 sur son entrée de donnée. Elle reçoit par ailleurs sur son entrée de commande le signal CS2' par le biais d'un circuit à retard CD1 et d'un inverseur INV1. La bascule BD1" produit un signal CS1' identique au signal de commande de sélection CS1 avec un certain retard, ce retard étant plus important que le retard imposé entre les signaux CS2 et CS2'. On remarquera que l'on pourrait isoler les bascules BD1" et BD2" en dimensionnant les circuits à retard de telle sorte que le retard induit par le circuit à retard CD1 soit supérieur au retard induit par le circuit à retard CD2.

Pour permettre une augmentation progressive du nombre d'étages, il suffit de fournir les signaux CS1' et CS2' aux circuits translateurs de potentiel qui produisent les signaux de commande de commutation, en lieu et place des signaux de commande de sélection CS1 et CS2. On pourra, de manière analogue, mettre en oeuvre une diminution progressive du nombre d'étages, tout en commandant plusieurs circuits de commutation à partir d'un seul signal de commande de sélection.

Pour que la diminution du nombre d'étages reste identique à ce qui est illustré par la figure 12, on pourra utiliser des multiplexeurs MUX1 (respectivement MUX2) recevant les signaux CS1 et CS1' (respectivement CS2 et CS2') et commandés par le signal de commande d'incrémentation LOW de manière à fournir les signaux CS1 et CS2 si le signal LOW est à l'état bas (ce qui est le cas quand le nombre d'étages est stable ou diminue) et les signaux CS1' et CS2' si le signal LOW est à l'état haut (dans ce cas, un front montant au moins étant apparu dans le signal LOW. le nombre d'étages a augmenté). Ainsi, on n'introduit pas de retard dans la commande des circuits de commutation lorsqu'il s'agit de déconnecter les étages, mais seulement lorsque l'on reconnecte des étages précédemment déconnectés .

Les exemples de fonctionnement décrits ci-dessus ne sauraient bien évidemment pas être limitatifs.

On pourra choisir d'isoler plus d'un étage à la fois, par exemple en utilisant une bascule pour commander plusieurs étages contigus, auquel cas les signaux de commande seront identiques pour ces étages. On pourra choisir de commander un nombre d'étages variable en fonction des bascules. Ce cas est illustré sur la figure 14.

### 4.3 - Circuit de commande : exemple 3.

Sur la figure 14, à la différence de la figure 12, la bascule BD1 est absente et la bascule BD2 reçoit VCC en entrée. La bascule BD2 fournit le signal de commande de sélection CS2. La bascule BD3 fournit le signal de commande de sélection CS3. On peut donc isoler un ou deux étages (Cn-2, ou Cn-1 et Cn) simultanément. On pourra, au choix, enlever les transistors SW1a et SW1b ou leur fournir le signal CS2 (si on souhaite conditionner la modification du nombre d'étages en fonction des phases fournis aux étages précédents, tel qu'illustré ci-dessus, en référence à la figure 9). De même, en maintenant les circuits de commutation entre les étages Cn-1 et Cn, on pourra retarder l'action du signal CS2 selon qu'il est utilisé pour agir sur ces circuits de commutation ou sur ceux qui sont présents entre les étages Cn-1 et Cn-2. En ce qui concerne les signaux de validation et de réinitialisation, on les produira de manière analogue à ce qui a été décrit en référence à la figure 12.

### 4.4 - Circuit de commande : exemple 4.

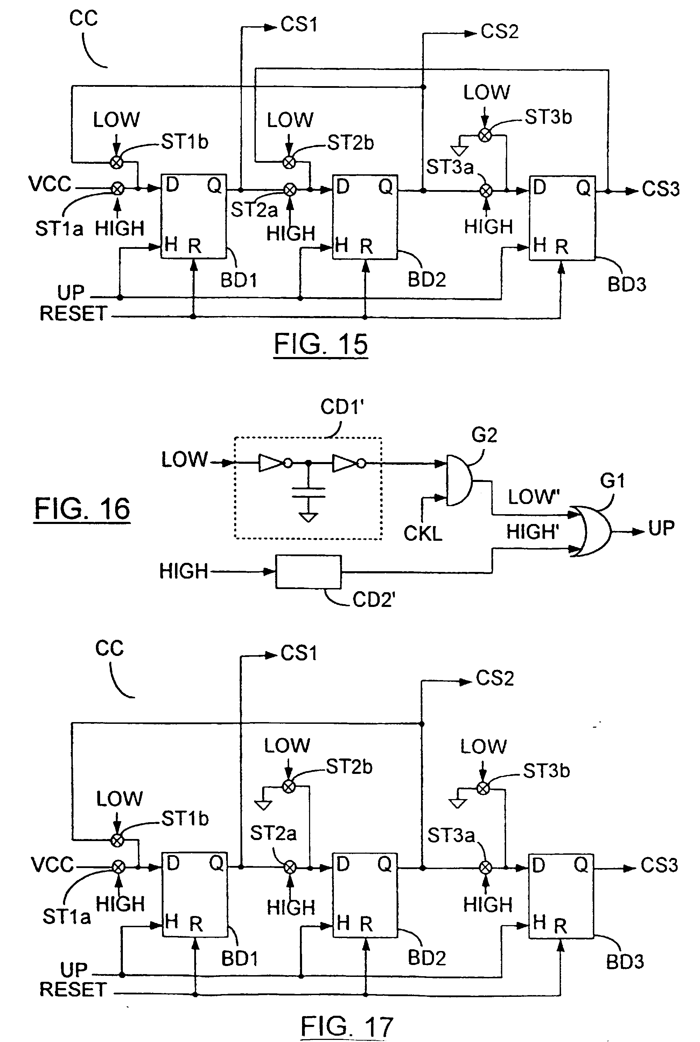

La figure 15 illustre un autre exemple de réalisation du circuit de commande CC, dans lequel on va diminuer et augmenter le nombre d'étages, étage par étage.

Dans l'exemple illustré sur la figure 15, on utilise des moyens de commutation pour relier les entrées D des bascules BD1, BD2 et BD3 soit à la sortie de la bascule précédente, soit à la sortie de la bascule suivante.

L'entrée D de la première bascule BD1 peut être soit reliée à la sortie de la bascule BD2, soit recevoir VCC. L'entrée D de la dernière bascule BD3 peut être soit reliée à la sortie de la bascule BD2, soit être reliée à la masse.

La sélection des signaux fournis aux entrées D des bascules est faite, par exemple, par le biais d'interrupteurs à transistors (ST1a et ST1b pour la bascule BD1, ST2a et ST2b pour la bascule BD2, ST3a et ST3b pour la bascule BD3).

Les interrupteurs ST1a, ST2a et ST3a, qui permettent de relier les entrées des bascules aux sorties des bascules précédentes (ou à VCC pour la première bascule), sont commandés par le signal de commande de décrémentation HIGH de sorte que ces interrupteurs soient fermés quand le signal HIGH est à l'état haut et ouverts sinon.

Les interrupteurs ST1b, ST2b et ST3b, qui permettent de relier les entrées des bascules aux sorties des bascules suivantes (ou à la masse pour la première bascule), sont commandés par le signal de commande d'incrémentation LOW de sorte que ces interrupteurs soient fermés quand le signal LOW est à l'état haut et ouverts sinon.

La production du signal de validation UP est modifiée par rapport aux exemples illustrés sur les figures 12 et 14. En effet, les bascules forment un registre à décalage permettant de décaler un état logique haut dans un sens sur front montant dans le signal de commande HIGH (de manière similaire aux exemples illustrés sur les figures 12 et 14), et de décaler un état logique bas dans l'autre sens sur front montant dans le signal de commande LOW (à la différence des exemples précédents).

La figure 16 illustre un circuit permettant de produire le signal de validation UP. Il comprend deux circuits à retard CD1' et CD2' permettant de produire deux signaux LOW' et HIGH' à partir des signaux de commande LOW et HIGH. Les signaux LOW' et HIGH' sont identiques aux signaux de commande LOW et HIGH, retardés avec un certain retard. Les circuits à retard CD1' et CD2' sont par exemple constitués de deux inverseurs montés en série et d'une capacité reliée entre la masse et la sortie (respectivement l'entrée) du premier (respectivement du deuxième) inverseur. Une transition en sortie du premier inverseur induit la charge ou la décharge de la capacité, ce qui retarde la propagation de la transition vers l'entrée du deuxième inverseur. Le fait de produire des signaux de commande retardés permet de s'assurer de la stabilité des états sur l'entrée de donnée des bascules avant l'apparition d'un front du signal de validation UP sur les entrées de commande de ces bascules.

Le signal de validation UP est produit par une porte logique G1 du type OU, à deux entrées. La porte G1 reçoit, sur ses entrées, le signal HIGH' et un signal LOW". Le signal LOW" est produit par une porte logique G2 de type ET, à deux entrées. La porte G2 reçoit, sur ses entrées, le signal LOW et un signal d'horloge CKL. Cette porte G2 permet de produire des fronts si le signal LOW est bloqué à l'état bas.

Le signal de réinitialisation RESET n'est plus utilisé pour augmenter le nombre d'étages. On l'utilisera uniquement pour réinitialiser toutes les bascules, au démarrage de la pompe de charge, de sorte à assurer que l'on dispose alors d'un nombre maximal d'étages.

Pour ce qui est du fonctionnement du circuit de commande illustré sur la figure 15, il sera essentiellement identique aux cas précédemment décrits pour ce qui concerne la diminution du nombre d'étages. En effet, à chaque apparition d'un front montant dans le signal de commande de décrémentation HIGH, on va décaler un état haut logique dans les bascules. La seule différence avec les cas précédemment décrits est la présence d'un léger retard entre le moment où le front apparaît et le moment où l'état haut est fourni en entrée de bascule. Cela permet de garantir la stabilité des états fournis aux bascules par le biais des interrupteurs ST1a, ST2a et ST3a.

Pour la reconnexion des étages, par contre, le fonctionnement est différent.

Supposons que le seuil d'incrémentation Vinc soit atteint par la tension de sortie Vout qui est en train de diminuer. Le signal de commande d'incrémentation LOW passe à l'état haut. La première bascule qui présente un état bas en sortie va alors fournir cet état en entrée de la bascule précédente. On va alors rajouter un étage en série avec les autres étages (si cela est possible). Il se peut que cela ne soit pas suffisant pour faire remonter la tension de sortie Vout qui reste alors en dessous du seuil d'incrémentation Vinc. Il est alors nécessaire, quand cela est possible, de rajouter un ou plusieurs autres étages pour essayer de faire remonter la valeur de la tension de sortie Vout. Or, l'absence de nouveau front dans le signal de commande LOW (et cela, tant que la tension Vout n'a pas atteint à nouveau le seuil de régulation Vreg) empêche alors de commander le rajout d'étages.

Une première solution est de prévoir par exemple un quatrième seuil Vseuil, inférieur au seuil d'incrémentation Vinc, qui produise la même action que le signal de commande d'incrémentation LOW tel qu'utilisé dans les exemples illustrés sur les figures 12 et 14, c'est-à-dire qui entraîne la production d'un front dans le signal de réinitialisation RESET fourni aux bascules. Quand le seuil Vseuil est atteint, on relie alors en série les n étages ensemble et le nombre d'étages est maximal.

La figure 16 illustre une deuxième solution.

Si le signal LOW' reste à l'état haut en permanence, le signal LOW" va suivre les variations du signal CKL. On produit ainsi des fronts actifs dans le signal UP quand le signal LOW est maintenu dans un état haut permanent (les interrupteurs ST1b, ST2b et ST3b sont alors fermés), ce qui entraîne l'augmentation progressive du nombre d'étages reliés entre eux. On pourra utiliser par exemple une des phases FX ou FN comme signal CKL.

Cette deuxième solution présente l'inconvénient d'avoir un temps de réaction pouvant être inférieur (sauf si seul le dernier étage est isolé) à la solution consistant à utiliser un quatrième seuil. Par contre, elle permet de ne reconnecter aux autres étages que le nombre d'étages nécessaire, ce qui est avantageux en ce qui concerne l'impédance de la pompe de charge. D'autres part, on induit moins de parasites qu'en reconnectant simultanément tous les étages, si aucun dispositif de retardement tel qu'illustré sur la figure 13 n'est utilisé. Enfin, l'absence de l'utilisation d'un quatrième seuil permet de limiter la taille et la consommation du circuit de régulation.

Dans l'exemple illustré par le circuit de la figure 15, quand on doit reconnecter un ou plusieurs étages, la première bascule ayant un état logique bas en sortie permet, sur front montant du signal de validation UP, de modifier l'état du signal en sortie de la bascule qui la précède. Ce dernier passe alors de l'état haut à l'état bas.

La dernière bascule BD3 reçoit un état bas en entrée, par le biais de l'interrupteur ST3b, de telle sorte que l'on puisse initier la reconnexion des étages si tous les étages pouvant être isolés l'ont été (les signaux en sortie des bascules sont en effet, si tel est le cas, tous à l'état haut).

### 4.5 - Circuit de commande : exemple 5.

On remarquera que l'on peut très bien reconnecter les étages plus rapidement qu'on ne les déconnecte, sans pour autant tous les reconnecter quand un front apparaît dans le signal de commande d'incrémentation LOW.

Ce cas est illustré sur la figure 17.

L'interrupteur ST2b est alors utilisé pour relier l'entrée D de la bascule BD2 à la masse. Ainsi, on reconnecte simultanément les étages Cn et Cn-1 à partir d'un seul front de commande du signal de validation UP. On pourra, éventuellement, introduire un certain retard dans la modification des états des signaux de commande fournis aux circuits de commutation. Pour ce faire, il suffit de produire des signaux retardés. tel qu'illustré, par exemple, sur la figure 13.

L'augmentation du nombre d'étages, par la reconnexion de plusieurs étages à partir d'une seul front dans le signal de validation UP, permet d'améliorer le temps de réaction de la pompe de charge, par rapport à l'exemple illustré par la figure 15, tout en minimisant les cycles de connexion et déconnexion.

En effet, en cas de chute de la tension de sortie Vout, la reconnexion systématique des n étages n'est pas forcément nécessaire. Si elle est faite systématiquement, on peut être amené à déconnecter immédiatement des étages qu'on vient de reconnecter. Le choix entre la reconnection de tous les étages entre eux ou de l'augmentation progressive du nombre d'étages dépendra de la priorité retenue, à savoir le temps de réaction de la pompe de charge pour fournir à nouveau la tension de sortie souhaitée ou la variation de l'impédance de sortie et de la consommation de la pompe de charge.

L'invention ne saurait se limiter aux cas particuliers illustrés ci-dessus. On comprendra qu'on peut très bien combiner les exemples illustrés ci dessus de sorte, par exemple, à déconnecter les étages par groupes de tailles variables et les reconnecter par groupes de tailles différentes.

Par ailleurs, on pourra isoler la sortie du dernier étage Cn de la sortie S par un transistor de type MOS à canal P, commandé par le signal VIS, de sorte à isoler complètement la sortie S des étages non utilisés.

On pourra également isoler complètement les étages entre eux, en prévoyant des transistors d'isolation entre les sorties 5 et les entrées 3 des étages.

On pourra aussi, sans sortir du cadre de l'invention, modifier la polarité des signaux de commande telle qu'illustrée, ou bien encore utiliser d'autres circuits pour produire ces signaux.

## Revendications

1. Circuit élévateur de tension du type pompe de charge comprenant des étages (C1, C2, ..., Cn) reliés en série pour produire, par transfert de charges entre les étages, une tension de sortie (Vout) à partir d'une tension d'alimentation (VCC), ledit circuit comprenant des moyens (REG, CC) pour diminuer ou augmenter le nombre d'étages reliés, en fonction de la valeur de la tension produite, de sorte que le nombre d'étages reliés est adapté au nombre d'étages nécessaires pour atteindre une valeur de tension de sortie donnée, compte tenu de la valeur de la tension d'alimentation,
caractérisé en ce qu'il comprend
- des moyens de commutation (SW1a, SW1b, SW2a, SW2b, SW3a, SW3b) pour relier, sélectivement, au moins une sortie (4) d'un étage (Cn-1) à une entrée (2) d'un autre étage (Cn) ou à une sortie (S) du circuit,
- un circuit de régulation (REG) comprenant, d'une part, des moyens de comparaison (I1, I2) pour comparer la valeur de la tension de sortie produite (Vout) à un seuil d'incrémentation (Vinc) et à un seuil de décrémentation (Vdec) et, d'autre part, des moyens (I1) pour comparer la valeur de la tension produite à un seuil de régulation (Vreg) compris entre les seuils d'incrémentation et de décrémentation et pour produire un premier signal de commande (HIGH) représentatif du résultat de cette comparaison, ce premier signal de commande étant fourni à un oscillateur (OSC) du circuit pour commander ou arrêter le transfert de charges entre les étages, et
- un circuit de commande (CC) pour produire, à partir de signaux de commande (HIGH, LOW) reçus du circuit de régulation, des signaux de commande de sélection (CS1, CS2, CS3) pour commander les moyens de commutation, ledit circuit de commande étant agencé de manière à diminuer le nombre d'étages quand le seuil de décrémentation est atteint, et à augmenter le nombre d'étages quand le seuil d'incrémentation est atteint.

2. Circuit selon la revendication 1, caractérisé en ce que le circuit de régulation comprend un premier comparateur à hystérésis(I1) pour produire le premier signal de commande (HIGH) de telle sorte qu'il passe dans un premier état logique quand le seuil de décrémentation (Vdec) est atteint et à ce qu'il passe dans un deuxième état logique quand le seuil de régulation (Vreg) est atteint.

3. Circuit selon la revendication 1, caractérisé en ce que le circuit de régulation comprend un premier comparateur à hystérésis (I2) pour produire un second signal de commande (LOW) de telle sorte qu'il passe dans un premier état logique quand le seuil d'incrémentation (Vinc) est atteint et à ce qu'il passe dans un deuxième état logique quand le seuil de régulation (Vreg) est atteint.

4. Circuit selon l'une des revendications 1 à 3, caractérisé en ce que le circuit de commande (CC) comprend une ou des bascules (BD1, BD2, BD3) produisant sur des sorties (Q) les signaux de commande de sélection (CS1, CS2, CS3) en fonction des signaux de commande (HIGH, LOW) produits par le circuit de régulation (REG).

5. Circuit selon la revendication 4, caractérisé en ce que le circuit de commande (CC) comprend plusieurs bascules formant un registre à décalage.

6. Circuit selon la revendication 5, caractérisé en ce que le circuit de commande comprend des moyens de commutation (ST1a, ST1b, ST2a, ST2b, ST3a, ST3b) pour relier sélectivement des entrées (D) de bascules à des sorties (Q) ou des entrées (D) d'autres bascules.

7. Circuit selon la revendication 6, caractérisé en ce que les bascules (BD1, BD2, BD3) sont agencées de manière à former un registre à décalage dans lequel on décale dans un sens un premier état logique pour augmenter le nombre d'étages, et dans lequel on décale un deuxième état logique dans le sens inverse pour diminuer le nombre d'étages.

8. Circuit selon l'une des revendications 5 à 7, caractérisé en ce que des bascules sont agencées de sorte à modifier simultanément les états de signaux de commande de sélection différents.

9. Circuit selon la revendication 5, caractérisé en ce que les bascules (BD1, BD2, BD3) sont agencées de manière à former un registre à décalage dans lequel on décale dans un sens un premier état logique pour augmenter le nombre d'étages, et dans lequel les sorties des bascules produisent simultanément des signaux de commande de sélection dans un deuxième état logique pour diminuer le nombre d'étages.

10. Circuit selon l'une des revendications 5 à 9, caractérisé en ce que le circuit de commande comprend au moins une bascule produisant un signal de commande de sélection pour commander plusieurs moyens de commutation.

11. Circuit selon l'une des revendications 8 à 10, caractérisé en ce qu'il comprend des moyens de retardement (CD1, CD2, INV1, INV2, BD1", BD2", MUX1, MUX2) pour retarder les signaux de commande de sélection (CS1, CS2, CS3) de manière à augmenter ou diminuer progressivement le nombre d'étages reliés quand on commande plusieurs moyens de commutation avec une seule bascule.

12. Circuit selon l'une des revendications 1 à 11, caractérisé en ce qu'il comprend des circuits translateurs de potentiel (BDi), contrôlés par les signaux de commande de sélection, pour commander les moyens de commutation.

13. Circuit selon l'une des revendications 1 à 12, caractérisé en ce qu'il comprend des moyens (BDi', BDi") pour synchroniser les signaux de commande des moyens de commutation avec des signaux de synchronisation (FX, FBX, FN, FBN) reçus par les étages pour piloter le transfert de charges entre les étages.

14. Procédé de production d'une tension de sortie (Vout), à partir d'une tension d'alimentation (VCC), en utilisant un circuit élévateur de tension, du type pompe de charge, ce circuit étant formé d'étages (C1, C2, ..., Cn) reliés en série et comprenant des moyens de commutation (SW1a, SW1b, SW2a, SW2b, SW3a, SW3b) pour isoler sélectivement des autres étages, ou relier sélectivement à des autres étages, certains des étages (Cn-2, Cn-1, Cn) de ce circuit,
caractérisé en ce qu'il comprend les étapes suivantes :
- démarrage du circuit, tous les étages étant reliés en série, de sorte que la valeur maximale de la tension produite pouvant être atteinte soit la plus importante possible, compte tenu du nombre d'étages du circuit et de la tension d'alimentation,
- diminution du nombre d'étages du circuit et/ou arrêt de ce circuit si un seuil de décrémentation (Vdec) est atteint par la tension de sortie,
- redémarrage du circuit si la tension de sortie chute et atteint un seuil de régulation (Vreg) inférieur au seuil de décrémentation, le nombre d'étages étant diminué et/ou le circuit étant arrêté si le seuil de décrémentation est à nouveau atteint,
- augmentation du nombre d'étages si, la tension de sortie ayant chuté et atteint le seuil de régulation, elle atteint ultérieurement un seuil d'incrémentation (Vinc) inférieur au seuil de régulation.

15. Procédé selon la revendication 14, caractérisé en ce que l'augmentation du nombre d'étages est réalisée par groupes d'étages et en ce qu'un retard est introduit entre les étages des groupes de sorte que l'augmentation soit progressive.

16. Procédé selon l'une des revendications 14 ou 15, le circuit étant agencé de sorte que l'augmentation du nombre d'étages soit telle, quand le seuil d'incrémentation est atteint, que le nombre d'étages soit inférieur au nombre maximal d'étages, caractérisé en ce que l'on reconnecte tous les étages en série si la tension de sortie atteint un quatrième seuil (Vseuil), inférieur au seuil d'incrémentation.

## Patentansprüche

1. Spannungserhöhungsschaltkreis des Ladungspumpe-Typs mit Stufen (C1, C2, ..., Cn), die in Reihe geschaltet sind, um mittels Transfer von Ladungen zwischen den Stufen aus einer Versorgungsspannung (VCC) eine Ausgangsspannung (Vout) zu erzeugen, wobei der Schaltkreis Vorrichtungen (REG, CC) zum Verringern oder Vergrößern der verbundenen Stufen in Abhängigkeit von dem Wert der erzeugten Spannung umfaßt, so daß die Zahl der verbundenen Stufen an die Zahl von notwendigen Stufen angepaßt wird, um unter Berücksichtigung des Wertes der Versorgungsspannung einen vorgegebenen Ausgangsspannungswert zu erzeugen,
dadurch gekennzeichnet, daß
er umfaßt:
- Schaltervorrichtungen (SW1a, SW1b, SW2a, SW2b, SW3a, SW3b) zum selektiven Verbinden wenigstens eines Ausgangs (4) einer Stufe (Cn-1) mit einem Eingang (2) einer anderen Stufe (Cn) oder einem Ausgang (S) des Schaltkreises,
- einen Regelschaltkreis (REG) mit einerseits Vergleichsvorrichtungen (I1, I2) zum Vergleichen des erzeugten Ausgangsspannungswertes (Vout) mit einer Inkrementierungsschwelle (Vinc) und einer Dekrementierungsschwelle (Vdec) und andererseits Vorrichtungen (I1) zum Vergleichen des erzeugten Spannungswertes mit einer Regelschwelle (Vreg) zwischen der Inkrementierungsschwelle und der Dekrementierungsschwelle und zum Erzeugen eines ersten Steuersignals (HIGH), das das Ergebnis dieses Vergleichs wiedergibt, wobei das erste Steuersignal an einen Oszillator (OSC) des Schaltkreises zum Ansteuern oder Anhalten des Ladungstransfers zwischen den Stufen ausgegeben wird, und
- einen Steuerschaltkreis (CC) zum Erzeugen von Auswahlsteuerungssignalen (CS1, CS2, CS3) zum Steuern der Schaltvorrichtungen aus Steuersignalen (HIGH, LOW), die am Regelschaltkreis anliegen, wobei der Steuerschaltkreis so betrieben wird, daß die Zahl der Stufen verringert wird, wenn die Dekrementierungsschwelle erreicht wird, und die Zahl der Stufen erhöht wird, wenn die Inkrementierungsschwelle erreicht wird.

2. Schaltkreis nach Anspruch 1, dadurch gekennzeichnet, daß der Regelschaltkreis eine erste Hysteresevergleichsvorrichtung (I1) zum Erzeugen des ersten Steuersignals (HIGH) umfaßt, die in einen ersten logischen Zustand übergeht, wenn die Dekrementierungsschwelle (Vdec) erreicht ist, und in einen zweiten Logikzustand übergeht, wenn die Regelschwelle (Vreg) erreicht ist.

3. Schaltkreis nach Anspruch 1, dadurch gekennzeichnet, daß der Regelschaltkreis eine erste Hysteresevergleichsvorrichtung (I2) zum Erzeugen eines zweiten Steuersignals (LOW) umfaßt, die in einen ersten Logikzustand übergeht, wenn die Inkrementierungsschwelle (Vinc) erreicht wird, und in einen zweiten Logikzustand übergeht, wenn die Regelschwelle (Vreg) erreicht wird.

4. Schaltkreis nach einem der Ansprüche 1 bis 3, dadurch gekennzeichnet, daß der Steuerschaltkreis (CC) eine oder mehrere Kippstufen (BD1, BD2, BD3) umfaßt, an deren Ausgängen (Q) die Auswahlsteuersignale (CS1, CS2, CS3) in Abhängigkeit von Steuersignalen (HIGH, LOW), die durch den Regelschaltkreis (REG) erzeugt wurden, anliegen.

5. Schaltkreis nach Anspruch 4, dadurch gekennzeichnet, daß der Steuerschaltkreis (CC) mehrere Kippstufen umfaßt, die ein Schieberegister bilden.

6. Schaltkreis nach Anspruch 5, dadurch gekennzeichnet, daß der Steuerschaltkreis Schaltvorrichtungen (ST1a, ST1b, ST2a, ST2b, ST3a, ST3b) zum selektiven Verbinden von Eingängen (D) von Kippstufen mit Ausgängen (Q) oder Eingängen (D) anderer Kippstufen umfaßt.

7. Schaltkreis nach Anspruch 6, dadurch gekennzeichnet, daß die Kippstufen (BD1, BD2, BD3) so aufgebaut sind, daß sie ein Schieberegister bilden, in welchem in einer Richtung ein erster Logikzustand verschoben wird, um die Zahl der Stufen zu erhöhen, und ein zweiter Logikzustand in der inversen Richtung verschoben wird, um die Zahl der Stufen zu verringern.

8. Schaltkreis nach einem der Ansprüche 5 bis 7, dadurch gekennzeichnet, daß die Kippstufen derart aufgebaut sind, daß die Zustände von unterschiedlichen Auswahlsteuersignalen gleichzeitig verändert werden.

9. Schaltkreis nach Anspruch 5, dadurch gekennzeichnet, daß die Kippstufen (BD1, BD2, BD3) derart aufgebaut sind, daß sie ein Schieberegister bilden, in welchem ein erster Logikzustand in einer Richtung verschoben wird, um die Zahl der Stufen zu erhöhen, und in welchem die Ausgänge von Kippstufen gleichzeitig Auswahlsteuersignale in einem zweiten Logikzustand erzeugen, um die Zahl der Stufen zu erniedrigen.

10. Schaltkreis nach einem der Ansprüche 5 bis 9, dadurch gekennzeichnet, daß der Steuerschaltkreis wenigstens eine Kippstufe umfaßt, die ein Auswahlsteuersignal zum Steuern mehreren Schaltervorrichtungen erzeugt.

11. Schaltkreis nach einem der Ansprüche 8 bis 10, dadurch gekennzeichnet, daß er Verzögerungsvorrichtungen (CD1, CD2, INV1, INV2, BD1", BD2", MUX1, MUX2) zum Verzögern von Auswahlsteuersignalen (CS1, CS2, CS3) erfaßt, um progressiv die Zahl der verbundenen Zustände zu vergrößern oder zu verringern, wenn mehrere Schaltvorrichtungen mit einer einzigen Kippstufe gesteuert werden.

12. Schaltkreis nach einem der Ansprüche 5 bis 11, dadurch gekennzeichnet, daß er Potentialumsetzungsschaltkreise (BDi) umfaßt, die durch die Auswahlsteuersignale gesteuert werden, um die Schaltvorrichtungen zu steuern.

13. Schaltkreis nach einem der Ansprüche 1 bis 12, dadurch gekennzeichnet, daß er Vorrichtungen (BDi', BDi") zum Synchronisieren der Steuersignale von Schaltvorrichtungen mit Synchronisationssignalen (FX, FBX, FN, FBN) umfaßt, die an den Stufen anliegen, um den Ladungstransfer zwischen den Stufen zu steuern.

14. Verfahren zum Erzeugen einer Ausgangsspannung (Vout) aus einer Versorgungsspannung (VCC) unter Verwendung eines Spannungserhöhungsschaltkreises eines Ladungspumpe-Typs, wobei dieser Schaltkreis aus Stufen (C1, C2, ..., Cn) besteht, die in Reihe geschaltet sind und Schaltvorrichtungen (SW1a, SW1b, SW2a, SW2b, SW3a, SW3b) umfaßt, um bestimmte Stufen (Cn-2, Cn-1, Cn) dieses Schaltkreises selektiv von anderen Stufen zu isolieren oder selektiv mit anderen Stufen zu verbinden,
dadurch gekennzeichnet, daß es die folgenden Schritte umfaßt:
- Initiieren des Schaltkreises, wobei alle Stufen in Reihe geschaltet sind, so daß der Maximalwert der erzeugten Spannung den größtmöglichen Wert unter Berücksichtigung der Zahl von Stufen des Schaltkreises und der Versorgungsspannung erreicht,
- Verringern der Zahl der Stufen des Schaltkreises und/oder Anhalten dieses Schaltkreises, wenn eine Dekrementierungsschwelle (Vdec) durch die Ausgangsspannung erreicht wird,
- Neuinitialisieren des Schaltkreises, wenn die Ausgangsspannung abfällt und eine Regelschwelle (Vreg) erreicht, die kleiner als die Dekrementierungsschwelle ist, wobei die Zahl der Stufen verringert wird und/oder der Schaltkreis angehalten wird, wenn die Dekrementierungsschwelle von neuem erreicht wird,
- Vergrößern der Zahl der Stufen, wenn die Ausgangsspannung beim Abfallen die Regelschwelle erreicht und sie später eine Inkrementierungsschwelle (Vinc) erreicht, die kleiner als die Regelschwelle ist.

15. Verfahren nach Anspruch 14, dadurch gekennzeichnet, daß das Vergrößern der Zahl der Stufen realisiert wird durch Gruppen von Stufen und daß eine Verzögerung zwischen den Gruppen von Stufen eingeführt wird, so daß die Zunahme progressiv ist.

16. Verfahren nach einem der Ansprüche 14 oder 15, wobei der Schaltkreis derart aufgebaut ist, daß die Vergrößerung der Zahl der Stufen, wenn die Inkrementierungsschwelle erreicht ist, so ist, daß die Zahl der Stufen kleiner als die Maximalzahl der Stufen ist, dadurch gekennzeichnet, daß alle Stufen in Reihe neu verbunden werden, wenn die Ausgangsspannung eine vierte Schwelle (Vseuil) erreicht, die kleiner als die Inkrementierungsschwelle ist.

## Claims

1. Voltage-booster circuit of the charge-pump type, comprising stages (C1, C2,..., Cn) linked in series in order, by transfer of charges between the stages, to produce an output voltage (Vout) from a power-supply voltage (VCC), the said circuit comprising means (REG, CC) for reducing or increasing the number of linked stages, as a function of the value of the voltage produced, in such a way that the number of linked stages is matched to the number of stages necessary to reach a given output-voltage value, having regard to the value of the power-supply voltage,
characterised in that it comprises
- switching means (SW1a, SW1b, SW2a, SW2b, SW3a, SW3b) for selectively linking at least one output (4) of a stage (Cn-1) to an input (2) of another stage (Cn) or to an output (S) of the circuit,
- a regulation circuit (REG) comprising, on the one hand, comparison means (I1, I2) for comparing the value of the output voltage produced (Vout) with an incrementation threshold (Vinc) and with a decrementation threshold (Vdec) and, on the other hand, means (I1) for comparing the value of the voltage produced with a regulation voltage (Vreg) lying between the incrementation and decrementation thresholds and for producing a first control signal (HIGH) representative of the result of this comparison, this first control signal being supplied to an oscillator (OSC) of the circuit in order to cause or stop the transfer of charges between the stages, and
- a control circuit (CC) for producing, from control signals (HIGH, LOW) received from the regulation circuit, selection-control signals (CS1, CS2, CS3) for controlling the switching means, the said control circuit being configured in such a way as to reduce the number of stages when the decrementation threshold is reached, and to increase the number of stages when the incrementation threshold is reached.

2. Circuit according to Claim 1, characterised in that the regulation circuit comprises a first hysteresis-type comparator (I1) for producing the first control signal (HIGH) in such a way that it passes into a first logic state when the decrementation threshold (Vdec) is reached and that it passes into a second logic state when the regulation threshold (Vreg) is reached.

3. Circuit according to Claim 1, characterised in that the regulation circuit comprises a first hysteresis-type comparator (I2) for producing a second control signal (LOW) in such a way that it passes into a first logic state when the incrementation threshold (Vinc) is reached and that it passes into a second logic state when the regulation threshold (Vreg) is reached.

4. Circuit according to one of Claims 1 to 3, characterised in that the control circuit (CC) comprises one or more flip-flops (BD1, BD2, BD3) producing the selection-control signals (CS1, CS2, CS3) on outputs (Q) as a function of the control signals (HIGH, LOW) produced by the regulation circuit (REG).

5. Circuit according to Claim 4, characterised in that the control circuit (CC) comprises several flip-flops forming a shift register.

6. Circuit according to Claim 5, characterised in that the control circuit comprises switching means (ST1a, ST1b, ST2a, ST2b, ST3a, ST3b,) for selectively linking inputs (D) of flip-flops to outputs (Q) or inputs (D) of other flip-flops.

7. Circuit according to Claim 6, characterised in that the flip-flops (BD1, BD2, BD3) are configured in such a way as to form a shift register in which a first logic state is shifted in one direction for increasing the number of stages, and in which a second logic state is shifted in the inverse direction for reducing the number of stages.

8. Circuit according to one of Claims 5 to 7, characterised in that flip-flops are configured in such a way as simultaneously to modify the states of different selection-control signals.

9. Circuit according to Claim 5, characterised in that the flip-flops (BD1, BD2, BD3) are configured in such a way as to form a shift register in which a first logic state is shifted in one direction for increasing the number of stages, and in which the outputs of the flip-flops simultaneously produce selection-control signals in a second logic state for reducing the number of stages.

10. Circuit according to one of Claims 5 to 9, characterised in that the control circuit comprises at least one flip-flop producing a selection-control signal for controlling several switching means.

11. Circuit according to one of Claims 8 to 10, characterised in that it comprises delay means (CD1, CB2, INV1, INV2, BD1", BD2", MUX1, MUX2) for delaying the selection-control signals (CS1, CS2, CS3) in such a way as progressively to increase or reduce the number of linked stages when several switching means are controlled with a single flip-flop.

12. Circuit according to one of Claims 1 to 11, characterised in that it comprises potential-translator circuits (BDi), controlled by the selection-control signals, for controlling the switching means.

13. Circuit according to one of Claims 1 to 12, characterised in that it comprises means (BDi', BDi'') for synchronising the control signals for the switching means with synchronisation signals (FX, FBX, FN, FBN) received by the stages in order to govern the transfer of charges between the stages.

14. Method of producing an output voltage (Vout), from a power-supply voltage (VCC), by using a voltage-booster circuit, of the charge-pump type, this circuit being formed by stages (C1, C2, ..., Cn) linked in series and comprising switching means (SW1a, SW1b, SW2a, SW2b, SW3a, SW3b) for selectively isolating certain of the stages (Cn-2, Cn-1, Cn) of this circuit from the other stages, or selectively connecting them to the other stages,
characterised in that it comprises the following steps:
- starting up the circuit, all the stages being linked in series, in such a way that the maximum value of the voltage produced capable of being reached is as high as possible, having regard to the number of stages of the circuit and to the power-supply voltage,
- reducing the number of stages of the circuit and/or stopping this circuit if a decrementation threshold (Vdec) is reached by the output voltage,
- re-starting the circuit if the output voltage drops and reaches a regulation threshold (Vreg) below the decrementation threshold, the number of stages being reduced and/or the circuit being stopped if the decrementation threshold is again reached,
- increasing the number of stages if, the output voltage having dropped and reached the regulation threshold, it subsequently reaches an incrementation threshold (Vinc) below the regulation threshold.

15. Method according to Claim 14, characterised in that the increasing of the number of stages is carried out in groups of stages, and in that a delay is introduced between the stages of the groups in such a way that the increasing is progressive.

16. Method according to one of Claims 14 and 15, the circuit being configured in such a way that the increasing of the number of stages is such that, when the incrementation threshold is reached, the number of stages is less than the maximum number of stages, characterised in that all the stages are reconnected in series if the output voltage reaches a fourth threshold (Vthreshold), below the incrementation threshold.
